# EUROPÄISCHE PATENTSCHRIFT

(11) **EP 4 363 747 B1**
(45) Veröffentlichungstag und Bekanntmachung des Hinweises auf die Patenterteilung: **09.04.2025**
(21) Anmeldenummer: 22741254.1
(22) Anmeldetag: 04.07.2022
(51) Int. Cl.: F16K 1/42, F16K 3/24, F16K 25/00, F16K 41/02, F16K 27/02

(54) **STELLVENTIL**
CONTROL VALVE
SOUPAPE DE RÉGLAGE

(30) Priorität: 02.07.2021 DE 202021103581 U
(43) Veröffentlichungstag der Anmeldung: 08.05.2024
(73) Patentinhaber: Samson Aktiengesellschaft, 60314 Frankfurt (DE)
(72) Erfinder: WETZSTEIN, Nadine, 60594 Frankfurt am Main (DE); KOENIG, Thomas, 60316 Frankfurt am Main (DE)
(74) Vertreter: Puschmann Borchert Kaiser Klettner Patentanwälte Partnerschaft mbB
(86) Internationale Anmeldenummer: PCT/EP2022/068467
(87) Internationale Veröffentlichungsnummer: WO 2023/275408

(56) Entgegenhaltungen:
- WO-A1-2016/049252
- CN-U- 209 012 471
- CN-U- 213 271 032
- DE-A1- 102018 214 650
- DE-A1- 102019 104 589
- US-A1- 2015 308 303

## Beschreibung

Die Erfindung betrifft ein Stellventil gemäß der im Oberbegriff des Anspruches 1 angegebenen Art.

Stellventile sind aus dem Stand der Technik hinreichend bekannt und weisen in der Regel ein Ventilgehäuse mit einem Ventilein- und Ventilauslass sowie einen, das Ventilgehäuse dichtend verschließenden Ventildeckel auf. Zur Steuerung/Regelung des Durchflusses eines das Stellventil durchströmenden Prozessmediums, ist im Strömungskanal des Ventilgehäuses, also zwischen Ventilein- und Ventilauslass, ein gehäusefester Ventilsitz angeordnet bzw. ausgebildet, der mit einem in Bezug zum Ventilsitz verfahrbaren und komplementär zum Ventilsitz ausgebildeten Ventilglied zusammenwirkt. Der Antrieb des Ventilsitzes erfolgt über eine mit dem Ventilglied verbundene Antriebsstange, die durch den Gehäusedeckel dichtend hindurchgeführt ist und mit einem gehäuseaußenseitig vorgesehenen Antrieb, insbesondere einen pneumatischen Antrieb, in Wirkverbindung steht.

Es ist weiterhin hinlänglich bekannt, dass beim Einsatz unter extremen Randbedingungen, wie Prozessmedien mit extrem hohen oder extrem kalten Temperaturen, aufgrund thermischer Ausdehnungen, insbesondere der Bauteile Ventilsitz und Ventilglied, veränderte Spaltgeometrien auftreten können, die die innere Dichtheit und auch das Stellverhältnis negativ beeinflussen. Dies ist darauf zurückzuführen, dass - da bauartbedingt die räumliche Ausdehnung des Ventilglieds klein gegenüber den Bauteilen Ventilsitz und Ventilgehäuse ist - bei einem Wärmeeintrag oder einer Wärmeabfuhr, die Bauteile Ventilglied, Ventilsitz und Ventilgehäuse unterschiedliche thermisch bedingte Längenänderungen erfahren, die in ungewollter Weise das Verhalten der inneren Dichtheit und auch das Stellverhältnis beeinflussen. Entsprechendes gilt auch, wenn unterschiedliche Materialien für die Bauteile Ventilglied, Ventilsitz und Ventilgehäuse verwendet werden. Da unterschiedliche Materialien in der Regel auch ein unterschiedliches thermisches Ausdehnungsverhalten aufweisen, sind die negativen Beeinflussungen entsprechend zu beobachten.

Ein weiteres, hinlänglich bekanntes Problem beim Einsatz von Stellventilen unter extremen Prozessmedientemperaturen ist, dass die extremen Temperaturen des Prozessmediums auch das Dichtheits- und Regelverhalten der im Gehäusedeckel verbauten Dichtanordnung, mittels der die Antriebsstange dichtend nach zum außen zum Antrieb geführt ist, negativ beeinflussen. Insbesondere ist ein temperaturbedingtes Ansteigen der Reibung zwischen Antriebsstange und Dichtanordnung zu beachten, was u.U. auch zu einem Verklemmen der Antriebsstange führen kann, sodass die Regelung des Stellventils stark beeinträchtigt oder gegebenenfalls gar nicht mehr gegeben ist.

Zum Schutz der Dichtanordnung vor extremen Prozessmedientemperaturen ist es bekannt, das Ventilgehäuse, d.h. den den Ventilein- und Ventilauslass aufweisenden Ventilgrundkörper, mittels eines das Ventilgehäuse in axialer Richtung a zum Ventildeckel hin verlängernden, als Isolationsteil wirkenden Verlängerungskörper, zu versehen, vgl. DE 10 2019 104 589 A1. Als nachteilig erweist sich hierbei, dass das Vorsehen des Isolationsteils den Ventilaufbau in seiner Höhe vergrößert. Speziell bei Tieftemperaturanwendungen werden seitens des Betreibers von ColdBox-Anlagen immer geringere Ventilaufstellwinkel gefordert, um möglichst viele Stellventil in einer Coldbox verbauen zu können, sodass sich die aus dem Stand der Technik bekannte Lösung als nicht mehr praktikabel erweist.

Um bei thermisch hoch belasteten Bauteilen eine thermische Beschädigung und/oder eine ungünstige thermische Beeinflussung zu reduzieren, ist es bekannt Materialien mit geringer thermischer Leitfähigkeit zu verwenden. Hierunter fallen z.B. auch Aerogele. Aerogele sind hochporöse Festkörper, bei denen das Volumen weitgehend aus Poren besteht. Ein Aerogel kann beispielsweise auf Silikatbasis oder Kohlenstoffbasis ausgebildet sein. Aerogele sind in der Regel in Form einer stark dendritischen Struktur ausgestaltet, bei der eine Verästelung von Partikelketten mit sehr vielen Zwischenräumen in Form von offenen Poren besteht. Die Partikelketten besitzen hierbei Kontaktstellen, so dass sich eine Ausgestaltung in Form eines stabilen, schwammartigen Netzes ergibt. Die Porengröße der offenen Poren kann hierbei im Nanometerbereich liegen. Mit Aerogelen können Bauteile beschichtet oder auch vollständige Bauteile hergestellt werden.

Die Verwendung von Aerogelen an sensiblen Stellen von Ventilen, um diese vor schädlichen thermischen Einflüssen zu schützen, ist aus dem Stand der Technik bekannt:
So offenbart die US 2, 464, 242 A ein Stellventil, dessen Ventilgehäuse mittels eines Isolierteils verlängert ist. Um einen Wärmetransport über die Antriebsstange zu reduzieren, schlägt die US 2, 464, 242 A vor, die Antriebsstange hohl auszubilden und mit einem Werkstoff auf Aerogelbasis zu füllen.

Die US 2015/03083031 A1 offenbart ein Einspritzventil für einen Verbrennungsmotor. Zum Schutz des hohen thermischen Belastungen ausgesetzten Ventilglieds schlägt die US 2015/0308303 A1 vor, das Ventilglied partiell mit einer aerogelen Oberflächenbeschichtung zu versehen.

Die WO 2016/049252 A1 offenbart ein thermisch hochbelastetes Stellventil und einen an das Stellventil angeflanschten Stellungsregler. Zum Schutz des an das Stellventil angeflanschten Stellungsreglers schlägt die WO 2016/049252 A1 vor, die an das thermisch hochbelastete Stellventil angrenzende Gehäusewandung des Stellungsreglers mehrlagig auszubilden, insbesondere eine aerogelbasierte Isolationsschicht sandwichartig zwischen zwei anderen Materialschichten anzuordnen.

DE10 2018 214650 A1 offenbart ein Stellventil gemäß dem Oberbegriff der Ansprüche 1 und 3.

Der Erfindung liegt die Aufgabe zugrunde ein Stellventil gemäß der im Oberbegriff des Anspruches 1 angegebenen Art derart weiterzubilden, dass auch beim Einsatz unter extremen Randbedingungen, nämlich Prozessmedien mit extrem hohen oder extrem kalten Temperaturen, ein einwandfreier Betrieb des Stellventils ermöglicht ist. Insbesondere soll ein einwandfreier Betrieb des Stellventils in Bezug auf die innere Dichtheit und Stellverhältnis sowie ein einwandfreier Betrieb in Bezug eine leichtgängige Betätigung der Antriebsstange sichergestellt sein.

Die Aufgabe gemäß dem ersten Aspekt, nämlich einen einwandfreien Betrieb des Stellventils in Bezug auf die innere Dichtheit und das Stellverhältnis zu ermöglichen, wird durch die kennzeichnenden Merkmale des Anspruches 1 in Verbindung mit seinen Oberbegriffsmerkmalen gelöst.

Der Unteranspruch 2 stellt eine vorteilhafte Weiterbildung des erfindungsgemäßen Stellventils gemäß Anspruch 1 dar.

In bekannter Art und Weise umfasst das Stellventil ein Ventilgehäuse mit einem Ventilein- und Ventilauslass sowie einen, das Ventilgehäuse dichtend verschließenden Ventildeckel. Zur Steuerung/Regelung des Durchflusses eines das Stellventil durchströmenden Prozessmediums, umfasst das Stellventil ferner in bekannter Art und Weise einen im Strömungskanal zwischen Ventilein- und Ventilauslass angeordneten gehäusefesten Ventilsitz, ein komplementär zum Ventilsitz ausgebildetes, in Bezug zum Ventilsitz verfahrbares Ventilglied sowie eine durch den Gehäusedeckel dichtend hindurchgeführte Antriebsstange, über die das Ventilglied mit einem gehäuseaußenseitigen Antrieb verbindbar ist, wobei der Ventildeckel eine Dichtanordnung umfasst, mittels der die Antriebsstange gegenüber dem Ventildeckel abgedichtet ist.

Erfindungsgemäß ist nunmehr vorgesehen, dass der Ventilsitz aus einem aerogelen Werkstoff ausgebildet oder mit einer aerogelen Beschichtung beschichtet ist und/oder dass das Ventilglied aus einem aerogelen Werkstoff ausgebildet oder mit einer aerogelen Beschichtung beschichtet ist. Insbesondere ist/sind der Ventilsitz und/oder das Ventilglied (jeweils) zumindest teilweise oder zumindest im Wesentlichen vollständig aus dem aerogelen Werkstoff ausgebildet.

Die erfindungsgemäße Ausgestaltung hat den Effekt, dass - da nunmehr die thermische Leitfähigkeit der Bauteile Ventilsitz und Ventilglied stark reduziert ist - die Wärmezu- bzw. abfuhr in bzw. aus den Bauteilen stark verringert ist, mit der Konsequenz, dass auch thermisch bedingte Längenänderungen der Bauteile Ventilsitz und Ventilglied stark reduziert ist. Somit ist in vorteilhafter Weise sichergestellt, dass keine bzw. nahezu keine Längenänderungen der Bauteile Ventilsitz und Ventilglied auftreten, sodass die designten geometrischen Beziehungen zwischen Ventilsitz und Ventilglied über einen größeren thermischen Einsatzbereich erhalten bleiben. D.h., die gewünschte Funktion oder deren Kennwerte bleiben bestehen, z.B. ausgelegte Leckageklasse nach IEC 60534-4 oder angegebenes Stellverhältnis.

Ist das Stellventil als ein Käfigventil ausgebildet, d.h. das Stellventil umfasst ferner einen im Strömungskanal zwischen Ventilein- und Ventilauslass angeordneten gehäusefesten Ventilkäfig, sieht eine vorteilhafte Weiterbildung vor, dass auch der Ventilkäfig aus einem aerogelen Werkstoff ausgebildet ist oder mit einer aerogelen Beschichtung beschichtet ist. Hierdurch ist in vorteilhafter Weise sichergestellt, dass auch bei Ausbildung des Stellventil als Käfigventil die designten geometrischen Beziehungen über einen größeren thermischen Einsatzbereich erhalten bleiben. Insbesondere ist der Ventilkäfig zumindest teilweise oder zumindest im Wesentlichen vollständig aus dem aerogelen Werkstoff ausgebildet. Vorzugsweise ist der Ventilkäfig zumindest im Wesentlichen vollständig mit der aerogelen Beschichtung beschichtet. Alternativ ist denkbar, dass der Ventilkäfig, insbesondere lediglich, in einem Kontaktbereich mit dem Ventilsitz und/oder dem Ventilgehäuse mit der aerogelen Beschichtung beschichtet ist, insbesondere um ein Wärmeübertrag von dem Ventilsitz auf den Ventilkäfig bzw. das Ventilgehäuse zu reduzieren.

Die Aufgabe gemäß dem zweiten Aspekt, nämlich einen einwandfreien Betrieb des Stellventils in Bezug auf eine leichtgängige Betätigung der Antriebsstange zu ermöglichen, wird durch die kennzeichnenden Merkmale des Anspruches 3 in Verbindung mit den Oberbegriffsmerkmalen des Anspruches 1 gelöst.

Die Unteransprüche 4 bis 9 stellen vorteilhafte Weiterbildungen des erfindungsmäßen Stellventil gemäß Anspruch 3 dar.

Erfindungsgemäß ist hierfür vorgesehen, dass der im Ventildeckel des Ventilgehäuses angeordneten, die Antriebsstange gegenüber dem Ventildeckel abdichtenden Dichtanordnung ein Isolationskörper zugeordnet ist, der aus einem aerogelen Werkstoff ausgebildete ist oder mit einer aerogelen Beschichtung beschichtet ist. Vorzugsweise ist der Isolationskörper im Wesentlichen vollständig mit der aerogelen Beschichtung beschichtet. Alternativ ist denkbar, dass der Isolationskörper lediglich in der Antriebsstange und/oder dem Ventildeckel zugewandten, insbesondere daran anliegenden, Bereichen mit der aerogelen Beschichtung beschichtet ist.

Unter der Formulierung "einen im Innern des Ventilgehäuses angeordneten, der Dichtanordnung zugeordneten Isolationskörper", ist ganz allgemein ein im inneren des Ventilgehäuses angeordnetes Bauteil zu verstehen, dass mit der Dichtanordnung im mittel- oder unmittelbaren Kontakt steht und geeignet ist, eine Wärmezufuhr in die Dichtanordnung bzw. einen Wärmetransport aus der Dichtanordnung zu verringern.

Die erfindungsgemäße Ausgestaltung erweist sich als besonders vorteilhaft, da nunmehr aufgrund des vorgesehenen, aus einem aerogelen Werkstoff ausgebildeten oder mit einer aerogelen Beschichtung beschichteten, Isolationskörpers, die Wärmezu- bzw. abfuhr in bzw. aus der Dichtanordnung stark reduziert wird, mit der Folge, dass auch kritische Temperaturen der Dichtanordnung, welche zu einem Anstieg der Reibung zwischen Antriebsstange und Dichtanordnung bzw. u.U. zu einem Verklemmen der Antriebsstange in der Dichtanordnung führen können, vermieden werden.

Insbesondere bei Verwendung von kyrogenen Medien als Prozessmedien, also bei Tieftemperaturanwendungen, erweist sich diese Ausgestaltung als besonders vorteilhaft, da nunmehr aufgrund des erfindungsgemäß im Innern des Ventilgehäuses angeordneten, aus einem aerogelen Werkstoff ausgebildeten oder mit einer aerogelen Beschichtung versehenen Isolationskörper, auf die bisher nach dem Stand der Technik, vgl. DE 10 2019 104 589 A1, übliche Ventilgehäusegestaltung, nämlich die axiale Verlängerung des Ventilgehäuses mittels eines als Isolationsteil wirkenden Verlängerungskörpers, verzichtet werden kann. D.h., es können aufgrund der nunmehr geringeren Ventilaufstellwinkel - wie seitens der Betreiber von Coldbox-Anlagen gefordert - mehr Ventile in eine Coldbox verbaut werden.

Gemäß einer Ausführungsform ist dabei vorgesehen, dass der Isolationskörper als eine in axiale Richtung a betrachtet unterhalb der Dichtanordnung positionierte, im Ventildeckel angeordnete Scheibe ausgebildet ist. Hierdurch ist in vorteilhafter Weise eine besonders kleinbauende Isolierung der Dichtanordnung ermöglicht.

Gemäß einer weiteren, besonders bevorzugten Ausführungsform ist der Isolationskörper als ein in axialer Richtung a betrachtet zwischen dem Gehäusedeckel und einer weiteren, im Ventilgehäuse fest verbauten Ventilkomponente axial verklemmt gehaltener, die Antriebsstange konzentrisch umschließenden Verdrängungskörper ausgebildet. Aufgrund der axialen Verklemmung zwischen Ventildeckel und der weiteren Ventilkomponente, wie z.B. einer Zirkulationssperre oder einem Ventilkäfig, ist auf eine einfache Art und Weise ein fester Sitz des Isolationskörper sichergestellt.

Bevorzugt ist dabei der Verdrängungskörper im Wesentlichen hülsenförmig, den in radialer Richtung r betrachteten Gehäuseinnenraum zwischen Antriebstange und angrenzender Innenwandung des Ventilgehäuses vollständig ausfüllend ausgebildet. Da nunmehr durch den hülsenförmigen Verdrängungskörper der gesamte Gehäuseinnenraum ausgefüllt ist, ist eine besonders effektive Isolierung der Dichtanordnung sichergestellt.

Eine weitere bevorzugte Ausführungsform sieht vor, dass die durch die Dichtanordnung hindurchgeführte Antriebsstange aus einem aerogelen Werkstoff ausgebildet ist oder mit einer aerogelen Beschichtung beschichtet ist, sodass die Antriebsstange selbst den der Dichtanordnung zugeordneten Isolationskörper bildet. Vorteilhaft an dieser Ausführungsform ist, dass für die beabsichtigte Isolierung der Dichtanordnung keine weiteren Bauteile benötigt werden.

Um auch eine Wärmezu- bzw. abfuhr in die Dichtanordnung über den Ventildeckel zu reduzieren, ist bevorzugt auch der Ventildeckel aus einem aerogelen Werkstoff ausgebildet oder mit einer aerogelen Beschichtung beschichtet.

Vorzugsweise ist zudem noch das Ventilglied aus einem aerogelen Werkstoff ausgebildet oder mit einer aerogelen Beschichtung beschichtet. Hierdurch ist sichergestellt, dass ein Wärmetransport vom Ventilglied über die Ventilstange zur Dichtanordnung unterbunden wird.

Der Gegenstand der nachfolgend noch gewürdigten Unteransprüche 10 bis 15 stellen vorteilhafte Weiterbildungen des erfindungsmäßen Stellventil gemäß Anspruch 1 und 3 dar:
Um bei geringen Bauraumbedarf ein großes Dichtheitsverhalten zu gewährleisten, ist die im Ventildeckel vorgesehene Dichtanordnung bevorzugt als eine Stopfbuchspackung ausgebildet. Vorzugsweise ist die Antriebsstange zweiteilig ausgebildet und umfasst eine mit dem Ventilglied verbundene Ventilgliedstange sowie eine mit der Ventilgliedstange fest verbundene, durch den Gehäusedeckel dichtend hindurchgeführte, mit einem Antrieb in Wirkverbindung bringbare Stellgliedstange. Denkbar ist aber auch eine einteilige Ausbildung der Antriebsstange, d.h. die Antriebsstange weist einen gehäuseinneren, mit dem Ventilglied verbundenen Antriebsstangeabschnitt sowie einen gehäuseaußenseitigen, d.h. aus dem Ventilgehäuse dichtend herausgeführten, mit einem Antrieb verbindbaren Antriebsstangenabschnitt auf.

Bevorzugt handelt es sich bei dem aerogelen Werkstoff um ein Halbmetall- oder Metalloxid, wie beispielsweise die Oxide Siliziumdioxid, Titanoxid oder Aluminiumoxid, aber auch kohlenstoffbasierte Substanzen sind denkbar. Wie erste Versuche gezeigt haben, erweisen sich diese Werkstoffe aufgrund ihrer Wärmeleiteigenschaften als besonders vorteilhaft in Hinblick auf den hier vorliegenden Einsatzbereich in einem Stellventil.

Bei der aerogelen Beschichtung handelt es sich bevorzugt um Verbunde aus den zuvor Werkstoffen mit Kunstharzen oder Polyamide oder auch aus Reinstoff.

Zudem wird vorgeschlagen, dass der Ventilsitz, insbesondere lediglich, in einem Kontaktbereich zu einer Verbindung des Ventilsitzes mit dem Ventilgehäuse mit der aerogelen Beschichtung beschichtet ist. Es können/kann ein temperaturbedingtes Verformen des Ventilsitzes und/oder sonstige temperaturbedingte Effekte auf den Ventilsitz im Kontaktbereich vorteilhaft verhindert werden. Dadurch kann vorteilhaft ein ungehinderter Ein- und Ausbau des Ventilsitzes gewährleistet werden. Es kann eine vorteilhaft hohe Modularität und eine vorteilhaft einfache Wartung des Stellventils ermöglicht werden, insbesondere auch bei einem Einsatz in einer Umgebung und/oder mit Medien mit relativ hohen oder niedrigen Temperaturen. Bevorzugt ist der Ventilsitz getrennt von dem Ventilgehäuse ausgebildet. Vorzugsweise ist der Ventilsitz abnehmbar bzw. austauschbar ausgebildet. Insbesondere ist der Ventilsitz in einem montierten Zustand kraft- und/oder formschlüssig mit dem Ventilgehäuse verbunden. Es ist denkbar, dass der Ventilsitz in dem montierten Zustand mit dem Ventilgehäuse verschraubt, verklemmt oder verspannt ist. Bevorzugt liegt der Ventilsitz über den Kontaktbereich zumindest teilweise an dem Ventilgehäuse, insbesondere einer Innenwand des Ventilgehäuses, an. Insbesondere erstreckt sich der Kontaktbereich des Ventilsitzes über eine Außenfläche des Ventilsitzes, die zumindest eine Auflagefläche des Ventilsitzes an dem Ventilgehäuse umfasst. Es ist denkbar, dass sich der Kontaktbereich bzw. die Außenfläche des Ventilsitzes über die Auflagefläche hinaus erstreckt, vorzugsweise um temperaturbedingte Effekte auf den Ventilsitz durch die Nähe zu einer Innenfläche des Ventilgehäuses zu verhindern bzw. zu reduzieren. Alternativ ist denkbar, dass der Ventilsitz und/oder das Ventilglied, insbesondere lediglich, in einem Bereich einer Drosselstelle des Stellventils mit der aerogelen Beschichtung beschichtet ist/sind. Insbesondere umfasst der Bereich der Drosselstelle des Stellventils eine Dichtkante des Ventilsitzes und/oder des Ventilglieds, die vorzugsweise zu einem Zusammenwirken mit dem Ventilglied bzw. dem Ventilsitz bei einem Schließen des Stellventils vorgesehen ist.

Weiter wird vorgeschlagen, dass der Ventilsitz und/oder das Ventilglied zumindest im Wesentlichen vollständig mit der aerogelen Beschichtung beschichtet sind/ist. Es kann ein vorteilhaft vollständiger Schutz des Ventilsitzes und/oder des Ventilglieds vor ungewollten temperaturbedingten Effekten, wie beispielsweise einer thermischen Umformung, ermöglicht werden, insbesondere bei einer Verwendung von Medien mit hohen Temperaturen. Dadurch können vorteilhaft eine hohe Zuverlässigkeit und Lebensdauer des Stellventils unter diesen Bedingungen erreicht werden. Bevorzugt erstreckt sich die aerogele Beschichtung über eine Außenfläche des Ventilsitzes und/oder des Ventilglieds. Darunter, dass ein Körper, insbesondere der Ventilsitz und/oder das Ventilglied, im Wesentlichen vollständig beschichtet sind soll insbesondere verstanden werden, dass eine Beschichtung, insbesondere die aerogele Beschichtung, sich über mindestens 95%, vorzugsweise mindestens 98% und besonders bevorzugt mindestens 99%, einer gesamten Oberfläche des Körpers erstreckt bzw. diese bedeckt. Beispielsweise ist denkbar, dass das Ventilglied in einem dem Antrieb zugewandten Bereich beschichtungsfrei ausgebildet ist, insbesondere um eine Verbindung mit einem anderen Bauteil des Stellventils zu ermöglichen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittansicht eines erfindungsgemäßen Stellventils;
- Fig. 2: eine weitere Ausführungsform eines erfindungsgemäßen Stellventils in einer Schnittdarstellung, und
- Fig. 3: einen vergrößerten Ausschnitt eines erfindungsgemäßen Stellventils gemäß einer weiteren Ausführungsform.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

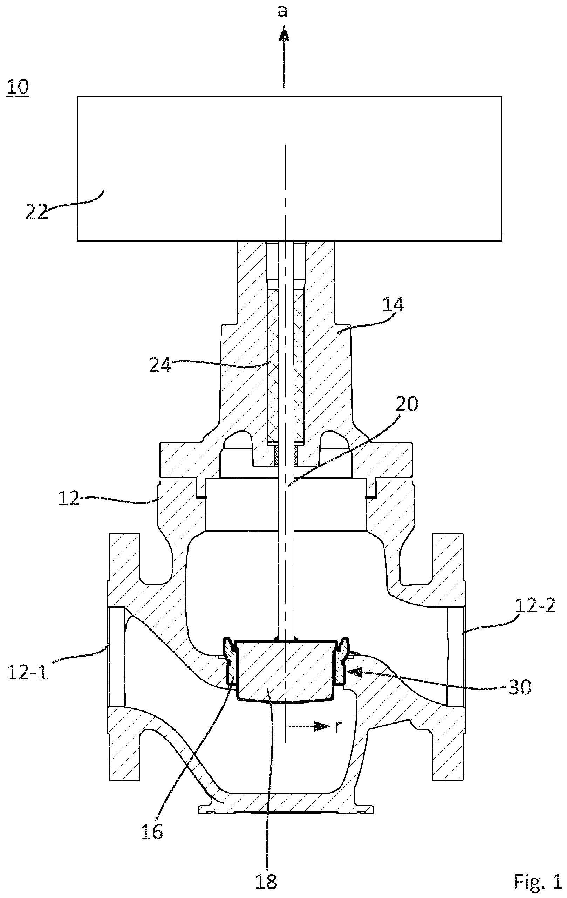

Fig. 1 zeigt ein insgesamt mit der Bezugsziffer 10 bezeichnetes Stellventil. Das Stellventil 10 umfasst in bekannter Art und Weise ein Ventilgehäuse 12 mit einem Ventileinlass 12-1 und einem Ventilauslass 12-2. Der das Ventilgehäuse 12 dichtend zur Umgebung verschließende Ventildeckel ist mit der Bezugsziffer 14 bezeichnet.

Zur Einstellung des Strömungsquerschnitts weist das Stellventil 10 in bekannter Art und Weise einen im Strömungskanal des Ventilgehäuses 12, also zwischen Ventileinlass 12-1 und Ventilauslass 12-2 angeordneten Ventilsitz 16, sowie ein komplementär zum Ventilsitz 16 ausgebildetes, in Bezug zum Ventilsitz 16 verfahrbares Ventilglied 18 auf. Wie aus Fig. 1 ersichtlich, ist vorliegend der Ventilsitz 16 als ein vom Ventilgehäuse 12 separates Bauteil ausgebildet, welches lösbar mit dem Ventilgehäuse 12 verbunden ist.

Zur Ventilgliedbetätigung steht das Ventilglied 18 über eine Antriebsstange 20 mit einem - in axialer Richtung a betrachtet - oberhalb des Ventildeckels 14 angeordneten Antrieb 22 in Wirkverbindung. Wie Fig. 1 weiter zeigt, ist im Ventildeckel 14 eine Dichtanordnung 24 angeordnet, mittels der die Antriebsstange 20 gegenüber dem Ventildeckel 14 abgedichtet ist. Vorliegend ist die Dichtanordnung 24 als eine Stopfbuchspackung ausgebildet.

Das in Fig. 1 dargestellte Stellventil 10 zeichnet sich dadurch aus, dass der Ventilsitz 16 und das Ventilglied 18 mit einer aerogelen Beschichtung beschichtet sind. In Fig. 1 ist die Beschichtung durch die verdickte Linienführung der Bauteile Ventilsitz 16 und Ventilglied 18 symbolisiert. Die aerogele Beschichtung hat einen starken isolierenden Effekt, mit der Folge, dass auch bei extrem hohen oder kalten Prozessmedientemperaturen, nahezu keine Wärmezufuhr oder Wärmeabfuhr vom Prozessmedium zu den Bauteilen Ventilsitz 16 und Ventilglied 18 stattfindet. Hierdurch ist in vorteilhafter Weise sichergestellt, dass auch keine Längenänderungen der Bauteile Ventilsitz 16 und Ventilglied 18 auftreten, sodass die designten geometrischen Beziehungen zwischen Ventilsitz 16 und Ventilglied 18 erhalten bleiben. Der Ventilsitz 16 ist getrennt von dem Ventilgehäuse 12 ausgebildet. Der Ventilsitz 16 ist mit dem Ventilgehäuse 12 verbunden und abnehmbar bzw. austauschbar ausgebildet. Das Ventilglied 18 und der Ventilsitz 16 sind hier jeweils im Wesentlichen vollständig mit der aerogelen Beschichtung beschichtet. Alternativ ist denkbar, dass das Ventilglied 18 und/oder der Ventilsitz 16 einzeln oder jeweils nur teilweise beschichtet sind, beispielsweise für den Ventilsitz 16 lediglich in einem Kontaktbereich 30 zu einer Verbindung mit dem Ventilgehäuse 12.

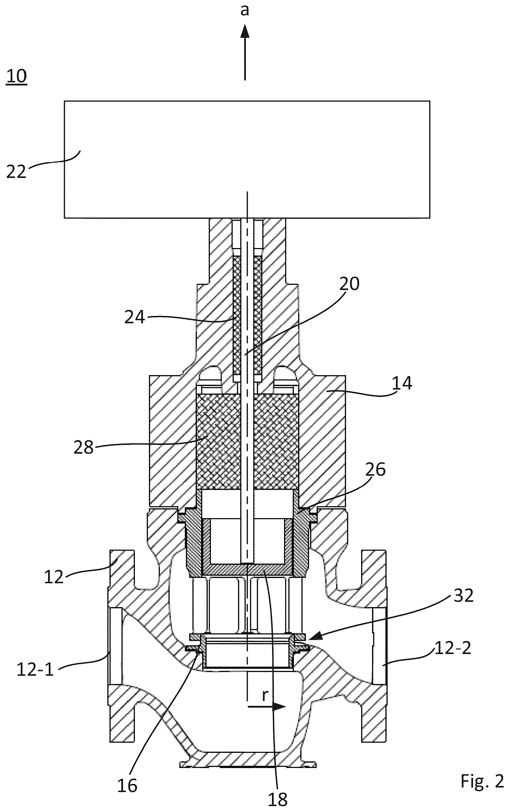

Das in Fig. 2 dargestellte Stellventil weist einen im wesentlichen gleichen Aufbau auf. Wie aus Fig. 2 ersichtlich, ist das Stellventil 10 als ein sogenanntes Käfigventil ausgebildet und weist in bekannter Art und Weise einen im Strömungskanal zwischen Ventileinlass 12-1 und Ventilauslass 12-2 angeordneten gehäusefesten Ventilkäfig 26 auf. Es ist denkbar, dass der Ventilkäfig 26 teilweise oder im Wesentlichen vollständig mit einer aerogelen Beschichtung beschichtet ist. Beispielsweise ist denkbar, dass der Ventilkäfig 26 lediglich in einem Kontaktbereich 32 mit dem Ventilsitz 16 und/oder dem Ventilgehäuse 12 mit der aerogelen Beschichtung beschichtet ist, insbesondere um ein Wärmeübertrag von dem Ventilsitz 16 auf den Ventilkäfig 26 zu reduzieren.

Das in Fig. 2 gezeigte Stellventil 10 zeichnet sich dadurch aus, der Dichtanordnung 24 ein aus einem Aerogel ausgebildeter, insgesamt mit der Bezugsziffer 28 bezeichnete Isolationskörper zugeordnet ist.

Gemäß der in Fig. 2 gezeigten Ausführungsform ist der Isolationskörper 28 hülsenförmigen, den in radialer Richtung r betrachteten Gehäuseinnenraum zwischen Antriebsstange 20 und Innenwandung des Ventilgehäuses 12 vollständig ausfüllend ausgebildet und ist in axialer Richtung a betrachtet zwischen dem Gehäusedeckel 14 und dem Ventilkäfig 26 verklemmt gehalten.

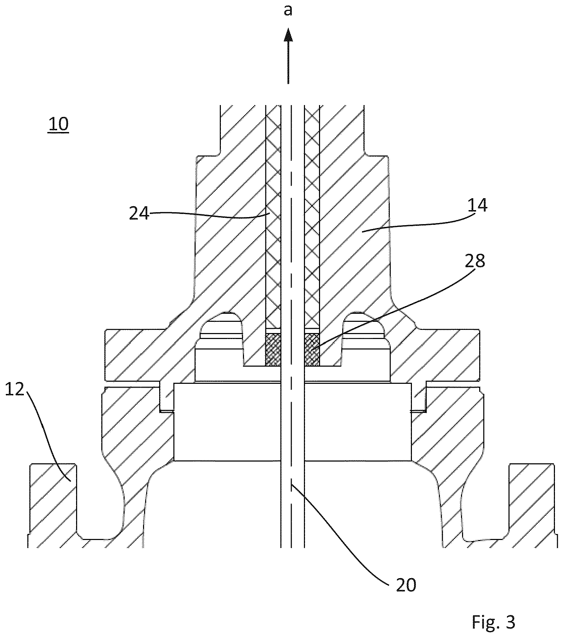

Auch die in Fig. 3 ausschnittsweise gezeigte Ausführungsform zeichnet sich dadurch aus, dass der Dichtanordnung 24 ein aus einem Aerogel ausgebildeten Isolationskörper 28 zugeordnet ist. Wie Fig. 3 zu entnehmen ist, ist dabei der Isolationskörper 28 als eine in axialer Richtung a betrachtet unterhalb der Dichtanordnung 24 positionierte, im Gehäusedeckel 14 angeordnete Scheibe ausgebildet

Das erfindungsgemäße Vorsehen des Isolationskörpers 28 erweist sich als besonders vorteilhaft, da aufgrund der isolierenden Wirkung des Isolationskörper 28 eine schädliche Wärmezufuhr in bzw. Wärmeabfuhr aus der Dichtanordnung 24 verhindert wird, sodass kritische, einen Reibungsanstieg zwischen Antriebsstange 20 und Dichtanordnung 24 auslösende Temperaturen im Bereich der Dichtanordnung 24 vermieden werden. Alternativ ist denkbar, dass der Isolationskörper 28 teilweise oder im Wesentlichen vollständig mit einer aerogelen Beschichtung beschichtet ist. Beispielsweise ist denkbar, dass der Isolationskörper 28 lediglich in der Antriebsstange 20 und/oder dem Ventildeckel 14 zugewandten, insbesondere daran anliegenden, Bereichen mit der aerogelen Beschichtung beschichtet ist.

### Bezugszeichenliste

- 10: Stellventil
- 12: Ventilgehäuse
- 12-1: Ventileinlass
- 12-2: Ventilauslass
- 14: Ventildeckel
- 16: Ventilsitz
- 18: Ventilglied
- 20: Antriebsstange
- 22: Antrieb
- 24: Dichtanordnung
- 26: Ventilkäfig
- 28: Isolationskörper
- 30: Kontaktbereich
- 32: Kontaktbereich

- a: axiale Richtung
- r: radiale Richtung

## Patentansprüche

1. Stellventil (10), umfassend ein Ventilgehäuse (12) mit einem Ventilein- und Ventilauslass (12-1, 12-2) und einem Ventildeckel (14), einen im Strömungskanal zwischen Ventilein- und Ventilauslass (12-1, 12-2) angeordneten gehäusefesten Ventilsitz (16), ein komplementär zum Ventilsitz (16) ausgebildetes Ventilglied (18), sowie eine durch den Gehäusedeckel (14) dichtend hindurchgeführte Antriebstange (20), über die das Ventilglied (18) mit einem gehäuseaußenseitigen Antrieb (22) verbindbar ist, wobei der Ventildeckel (14) eine Dichtanordnung (24) umfasst, mittels der die Antriebsstange (20) gegenüber dem Ventildeckel (14) abgedichtet ist, **dadurch gekennzeichnet, dass** der Ventilsitz (16) und/oder das Ventilglied (18) aus einem aerogelen Werkstoff ausgebildet sind/ist oder mit einer aerogelen Beschichtung beschichtet sind/ist.

2. Stellventil (10) nach Anspruch 1, **dadurch gekennzeichnet, dass** im Strömungskanal zwischen Ventilein- und Ventilauslass (12-1, 12-2) ferner ein gehäusefester Ventilkäfig (26) angeordnet ist, der aus einem aerogelen Werkstoff ausgebildet ist oder mit einer aerogelen Beschichtung beschichtet ist.

3. Stellventil (10) nach dem Oberbegriff des Anspruches 1, **gekennzeichnet durch** einen im Innern des Ventilgehäuses (12) angeordneten, der Dichtanordnung (24) zugeordneten Isolationskörper (28), wobei der Isolationskörper (28) aus einem aerogelen Werkstoff ausgebildet ist oder mit einer aerogelen Beschichtung beschichtet ist.

4. Stellventil (10) nach Anspruch 3, **dadurch gekennzeichnet, dass** der Isolationskörper (28) als eine in axiale Richtung (a) betrachtet unterhalb der Dichtanordnung (24) positionierte, im Ventildeckel (14) angeordnete Scheibe ausgebildet ist.

5. Stellventil (10) nach Anspruch 3, **dadurch gekennzeichnet, dass** der Isolationskörper (28) als ein die Antriebstange (20) konzentrisch umschließender Verdrängungskörper ausgebildet ist, der in axialer Richtung (a) betrachtet zwischen dem Ventildeckel (14) und einer weiteren, im Ventilgehäuse (12) fest verbauten Ventilkomponente (26) axial verklemmt gehalten ist.

6. Stellventil (10) nach Anspruch 5, **dadurch gekennzeichnet, dass** der Verdrängungskörper hülsenförmig, den in radialer Richtung (r) betrachteten Gehäuseinnenraum zwischen Antriebstange (20) und Innenwandung des Ventilgehäuses (12) vollständig ausfüllend ausgebildet ist.

7. Stellventil (10) nach Anspruch 3, **dadurch gekennzeichnet, dass** die durch die Dichtanordnung (24) hindurchgeführte Antriebstange (20) aus einem aerogelen Werkstoff ausgebildet ist oder mit einer aerogelen Beschichtung beschichtet ist, sodass die Antriebstange (20) selbst den der Dichtanordnung (24) zugeordneten Isolationskörper bildet.

8. Stellventil (10) nach Anspruch 7, **dadurch gekennzeichnet, dass** ferner der Gehäusedeckel (14) aus einem aerogelen Werkstoff ausgebildete ist oder mit einer aerogelen Beschichtung beschichtet ist.

9. Stellventil (10) nach Anspruch 7 oder 8, **dadurch gekennzeichnet, dass** ferner das Ventilglied (18) aus einem aerogelen Werkstoff ausgebildete ist oder mit einer aerogelen Beschichtung beschichtet ist.

10. Stellventil (10) nach einem der vorgenannten Ansprüche, **dadurch gekennzeichnet, dass** die Dichtanordnung (24) als eine Stopfbuchspackung ausgebildet ist.

11. Stellventil (10) nach einem der Ansprüche 1 bis 10, **dadurch gekennzeichnet, dass** die Antriebstange (20) zweiteilig ausgebildet ist und eine mit dem Ventilglied (18) verbundene Ventilgliedstange und eine damit verbundene, durch den Ventildeckel (14) dichtend hindurchgeführte, mit einem Antrieb (22) verbindbare Stellgliedstange umfasst.

12. Stellventil (10) nach einem der vorgenannten Ansprüche, **dadurch gekennzeichnet, dass** es sich bei dem aerogelen Werkstoff um ein Halbmetalloxid oder Metalloxid oder um eine kohlenstoffbasierte Substanz handelt.

13. Stellventil (10) nach einem der vorgenannten Ansprüche, **dadurch gekennzeichnet, dass** es sich bei der aerogelen Beschichtung um Halbmetall-, Metalloxide oder kohlenstoffbasierte Substanzen in Verbund mit Kunstharzen oder Polyamiden handelt.

14. Stellventil nach einem der vorgenannten Ansprüche, **dadurch gekennzeichnet, dass** der Ventilsitz (16), insbesondere lediglich, in einem Kontaktbereich (30) zu einer Verbindung des Ventilsitzes (16) mit dem Ventilgehäuse (12) mit der aerogelen Beschichtung beschichtet ist.

15. Stellventil nach einem der vorgenannten Ansprüche, **dadurch gekennzeichnet, dass** der Ventilsitz (16) und/oder das Ventilglied (18) zumindest im Wesentlichen vollständig mit der aerogelen Beschichtung beschichtet sind/ist.

## Claims

1. Control valve (10), comprising a valve housing (12) with a valve inlet and valve outlet (12-1, 12-2) and a valve cover (14), a valve seat (16) that is fixed to the housing and arranged in the flow channel between the valve inlet and valve outlet (12-1, 12-2), a valve member (18) that is designed to complement the valve seat (16), and a drive rod (20) which passes through the housing cover (14) in a sealing manner and which is used to connect the valve member (18) to a drive (22) located on the outside of the housing, which valve cover (14) comprises a sealing arrangement (24) which is used to seal the drive rod (20) with respect to the valve cover (14), **characterized in that** the valve seat (16) and/or the valve member (18) are/is made of an aerogel material or are/is coated with an aerogel coating.

2. Control valve (10) according to claim 1, **characterized in that,** furthermore, a valve cage (26) that is fixed to the housing is arranged in the flow channel between the valve inlet and the valve outlet (12-1, 12-2), which cage is made of an aerogel material or is coated with an aerogel coating.

3. Control valve (10) according to the preamble of claim 1, **characterized by** an insulating body (28) arranged in the interior of the valve housing (12) and associated with the sealing arrangement (24), which insulating body (26) is formed from an aerogel material or is coated with an aerogel coating.

4. Control valve (10) according to claim 3, **characterized in that** the insulating body (28) is designed as a disk which is positioned underneath the sealing arrangement (24), as viewed in the axial direction (a), and arranged in the valve cover (14).

5. Control valve (10) according to claim 3, **characterized in that** the insulating body (26) is designed as a displacement body which concentrically encloses the drive rod (20) and which, as viewed in the axial direction (a), is held axially clamped between the valve cover (14) and another valve component (26) permanently installed in the valve housing (12).

6. Control valve (10) according to claim 5, **characterized in that** the displacement body is shaped like a sleeve and designed to completely fill the interior of the housing, as viewed in the radial direction (r), between the drive rod (20) and the inner wall of the valve housing (12).

7. Control valve (10) according to claim 3, **characterized in that** the drive rod (20) passing through the sealing arrangement (24) is made of an aerogel material or is coated with an aerogel coating, so that the drive rod (20) itself forms the insulating body associated with the sealing arrangement (24).

8. Control valve (10) according to claim 7, **characterized in that,** furthermore, the housing cover (14) is made of an aerogel material or is coated with an aerogel coating.

9. Control valve (/10) according to any one of claims 7 or 8 above, **characterized in that,** furthermore, the valve member (18) is made of an aerogel material or is coated with an aerogel coating.

10. Control valve (10) according to any one of the preceding claims, **characterized in that** the sealing arrangement (24) is designed as stuffing box packing.

11. Control valve (10) according to any one of claims 1 to 10 above, **characterized in that** the drive rod (20) is formed in two parts and comprises a valve member rod connected to the valve member (18) and an actuator rod connected thereto, which latter passes through the valve cover (14) in a sealing manner and is adapted to be connected to a drive (22).

12. Control vale (10) according to any one of the preceding claims, **characterized in that** the aerogel material is a metalloid oxide, or a metal oxide, or a carbon-based substance.

13. Control valve (10) according to any one of the preceding claims, **characterized in that** the aerogel coating is made of metalloid oxides, of metal oxides, or of carbon-based substances, in combination with synthetic resins or polyamides.

14. Control valve according to any one of the preceding claims, **characterized in that** the valve seat (16) is coated with the aerogel coating, in particular only, in a contact area (30) for a connection of the valve seat (16) to the valve housing (12).

15. Control valve according to any one of the preceding claims, **characterized in that** the valve seat (16) and/or the valve member (18) are/is at least substantially completely coated with the aerogel coating.

## Revendications

1. Soupape de réglage (10), comprenant un carter de soupape (12) avec une entrée de soupape et sortie de soupape (12-1, 12-2) et un couvercle de soupape (14), un siège de soupape (16) fixé au carter, disposé dans le canal d'écoulement entre l'entrée de soupape et la sortie de soupape (12-1, 12-2), un organe de soupape (18) réalisé de manière complémentaire au siège de soupape (16), ainsi qu'une tige d'entraînement (20) guidée à travers le couvercle de carter (14) de manière étanche, par l'intermédiaire de laquelle l'organe de soupape (18) peut être relié à un entraînement (22) côté extérieur de carter, dans laquelle le couvercle de soupape (14) comprend un ensemble d'étanchéité (24), au moyen duquel la tige d'entraînement (20) est étanchéifiée par rapport au couvercle de soupape (14), **caractérisée en ce que** le siège de soupape (16) et/ou l'organe de soupape (18) est/sont réalisés à partir d'un matériau aérogel ou est/sont revêtus d'un revêtement aérogel.

2. Soupape de réglage (10) selon la revendication 1, **caractérisée en ce qu'**une cage de soupape (26) fixée au carter, qui est réalisée à partir d'un matériau aérogel ou est revêtue d'un revêtement aérogel, est disposée en outre dans le canal d'écoulement entre l'entrée de soupape et la sortie de soupape (12-1, 12-2).

3. Soupape de réglage (10) selon le préambule de la revendication 1, **caractérisée par** un corps isolant (28) disposé à l'intérieur du carter de soupape (12), associé à l'ensemble d'étanchéité (24), dans laquelle le corps isolant (28) est réalisé à partir d'un matériau aérogel ou est revêtu d'un revêtement aérogel.

4. Soupape de réglage (10) selon la revendication 3, **caractérisée en ce que** le corps isolant (28) est réalisé sous la forme d'un disque positionné au-dessous de l'ensemble d'étanchéité (24) vu dans la direction axiale (a), disposé dans le couvercle de soupape (14).

5. Soupape de réglage (10) selon la revendication 3, **caractérisée en ce que** le corps isolant (28) est réalisé sous la forme d'un corps de déplacement entourant la tige d'entraînement (20) de manière concentrique, qui vu dans la direction axiale (a) est maintenu de manière coincée axialement entre le couvercle de soupape (14) et un autre composant de soupape (26) monté à demeure dans le carter de soupape (12).

6. Soupape de réglage (10) selon la revendication 5, **caractérisée en ce que** le corps de déplacement est réalisé en forme de douille, de manière à remplir entièrement l'espace intérieur de carter vu dans la direction radiale (r) entre la tige d'entraînement (20) et la paroi intérieure du carter de soupape (12).

7. Soupape de réglage (10) selon la revendication 3, **caractérisée en ce que** la tige d'entraînement (20) guidée à travers l'ensemble d'étanchéité (24) est réalisée à partir d'un matériau aérogel ou est revêtue d'un revêtement aérogel, de sorte que la tige d'entraînement (20) elle-même forme le corps isolant associé à l'ensemble d'étanchéité (24).

8. Soupape de réglage (10) selon la revendication 7, **caractérisée en ce qu'**en outre le couvercle de carter (14) est réalisé à partir d'un matériau aérogel ou est revêtu d'un revêtement aérogel.

9. Soupape de réglage (10) selon la revendication 7 ou 8, **caractérisée en ce qu'**en outre l'organe de soupape (18) est réalisé à partir d'un matériau aérogel ou est revêtu d'un revêtement aérogel.

10. Soupape de réglage (10) selon l'une quelconque des revendications précédentes, **caractérisée en ce que** l'ensemble d'étanchéité (24) est réalisé sous la forme d'une garniture de presse-étoupe.

11. Soupape de réglage (10) selon l'une quelconque des revendications 1 à 10, **caractérisée en ce que** la tige d'entraînement (20) est réalisée en deux parties et comprend une tige d'organe de soupape reliée à l'organe de soupape (18) et une tige d'organe de réglage reliée à celle-ci, guidée à travers le couvercle de soupape (14) de manière étanche, pouvant être reliée à un entraînement (22).

12. Soupape de réglage (10) selon l'une quelconque des revendications précédentes, **caractérisée en ce que** le matériau aérogel est un oxyde semi-métallique ou oxyde métallique ou une substance à base de carbone.

13. Soupape de réglage (10) selon l'une quelconque des revendications précédentes, **caractérisée en ce que** le revêtement aérogel est des oxydes semi-métalliques, métalliques ou des substances à base de carbone en liaison avec des résines synthétiques ou des polyamides.

14. Soupape de réglage selon l'une quelconque des revendications précédentes, **caractérisée en ce que** le siège de soupape (16) est revêtu du revêtement aérogel, en particulier seulement, dans une zone de contact (30) pour une liaison du siège de soupape (16) au carter de soupape (12).

15. Soupape de réglage selon l'une quelconque des revendications précédentes, **caractérisée en ce que** le siège de soupape (16) et/ou l'organe de soupape (18) est/sont revêtus au moins sensiblement entièrement du revêtement aérogel.
